# EUROPEAN PATENT SPECIFICATION

(11) **EP 1 346 595 B1**
(45) Date of publication and mention of the grant of the patent: **26.07.2006**
(21) Application number: 01273014.9
(22) Date of filing: 28.12.2001
(51) Int. Cl.: H04Q 7/38

(54) **METHOD AND SYSTEM FOR HANDOVER OF A SHARED CHANNEL IN A CDMA CELLULAR MOBILE RADIO SYSTEM**
VERFAHREN UND SYSTEM ZUR WEITERREICHUNG EINES GEMEINSAM GENUTZTEN KANALS IN EINEM ZELLULAREN CDMA-MOBILFUNKSYSTEM
PROCEDE ET SYSTEME DE TRANSFERT D'UNE VOIE PARTAGEE DANS UN SYSTEME RADIO MOBILE CELLULAIRE AMRC

(30) Priority: 29.12.2000 SE 0004922
(43) Date of publication of application: 24.09.2003
(73) Proprietor: TELEFONAKTIEBOLAGET LM ERICSSON (publ), 164 83 Stockholm (SE)
(72) Inventor: ANDERSSON, Andreas, SE-431 49 Mölndal (SE); KARLSSON, Patrik, S-138 34 Älta (SE); DENKERT, Niklas, S-169 71 Solna (SE)
(74) Representative: Lind, Robert
(86) International application number: PCT/SE2001/002924
(87) International publication number: WO 2002/054819

(56) References cited:
- EP-A1- 0 876 008
- WO-A1-00/79809
- WO-A1-99/67972
- GB-A- 2 343 330
- US-A- 5 781 861
- US-A- 6 018 662
- US-B1- 6 278 881
- PATENT ABSTRACTS OF JAPAN & JP 07 023 449 A (OKI ELECTRIC IND CO LTD) 24 January 1995

## Description

### TECHNICAL FIELD OF THE INVENTION

The present invention relates to cellular mobile radio systems, and more especially to handover of a common or shared channel in such a system, particularly in a Universal Mobile Telecommunications System, UMTS.

### BACKGROUND AND DESCRIPTION OF RELATED ART

To conduct handover from one radio channel, connecting a mobile station to a first radio base station, to another radio channel, connecting the mobile station to a second radio base station, as the mobile station moves in a cellular mobile radio system is well known. When each radio base station covers an area, a cell, a radio channel is handed over as the mobile station moves from one cell to another.

Use of shared or common channels, particularly for signaling purposes, is known from prior art. A shared channel or common channel is shared between or common to several users as opposed to a dedicated channel, dedicated to a particular user or a particular purpose. Either the same channel is used for dedicated use and shared purposes or different channels are used for these services, generally both services are handed over simultaneously with the change of base stations, according to prior art.

From prior art it is also known to hand over dedicated channels from one sector to another associated with one single base station in so-called sectorized cells. In this case it is also known to use shared channels that may be common to the various sectors and consequently does not need to be handed over as the mobile station moves between the sectors associated with the base station.

3^{rd} Generation Partnership Project (3GPP): *Technical Specification Group Radio Access Network, Vocabulary, 3G TS 25.990 v3.0.0, France, October 1999,* explains the concept of an active set using 3GPP terminology as a *"Set of radio links simultaneously involved in* a *specific communication service between an User Equipment and a UTRAN access* point."

International patent application WO9967972 describes a cellular communication system with common channel soft handoff.

*International patent application WO0031988* describes a method of selecting a master cell from a set of cells, a so-called Active Set. The international patent application describes a rule where the cell, which has been in the Active Set for the longest time, is selected as the master cell. Upon removal from the Active Set a new master cell, chosen in accordance with the rule, replaces the existing master cell.

*International patent application WO0035206* discusses the use of a Downlink Shared Channel, DSCH, and its synchronization to a Broadcast Control Channel, BCCH, and related difficulties of using soft handover of a DSCH. It suggests synchronization of the DSCH to a Dedicated Channel, DCH, in place of the BCCH.

*International patent application WO9914972* considers the load of real-time data and non real-time data in the process of selecting a base station during handover. It also incorporates the total transmission power used by the base station as a parameter.

*U.S. Patent US5781861* reveals that traffic density and power allocation are used as handover parameters.

*European* patent *application EP0876008* discusses the interrelationship between spreading factor and data rate.

### SUMMARY OF THE INVENTION

To only use base station selection criteria based on power transmitted to/from one single user equipment, UE, is inadequate in several respects.

An Active Set is a Set of radio links simultaneously involved in a specific communication service between a User Equipment and a UTRAN access point. Within an Active Set several base stations may perform almost equally well as regards received signal strength. To simply select the base station yielding the strongest received signal for hard handover of a shared channel will then cause an excessive number of handovers.

Consequently, an object of this patent application is to present a selection process for selection of a new base station for hard handover in relation to the cells associated with an Active Set.

It is also an object to achieve relevant decision criteria for handover that are related to traffic load/congestion and to the total power consumption at a radio base station, including the power transmitted to all mobile stations communicating with the RBS, particularly on a shared channel.

These objects are met by using a dynamic Active Set oriented cell selection for handover of a common downlink packet data channel, such as a DSCH, the selection being traffic related, power related or link related.

Preferred embodiments are grouped into two fundamental embodiments. According to a first fundamental embodiment of the invention, the common packet data channel of a serving base station is not handed over to another base station, until the radio link between the User Equipment and the serving base station is scheduled, in accordance with a specified criterion, to be excluded from the Active Set. When the handover is completed, the base station to which the common packet data channel is handed over acts as the serving base station.

According to a second fundamental embodiment of the invention, the best cell, in accordance with a specified criterion, is selected within the Active Set as a serving cell of the common packet data channel. Preferred embodiments further reveals related criteria for handover.

Preferred embodiments of the invention, by way of examples, are described with reference to the accompanying drawings below.

### BRIEF DESCRIPTION OF THE DRAWINGS

Figure 1 displays an exemplary code tree and corresponding spreading factors, according to prior art.
Figure 2 illustrates schematically a radio communication system and a first Active Set according to the invention.
Figure 3 illustrates schematically a radio communication system and a second Active Set according to the invention.
Figure 4 illustrates schematically a radio communication system and a third Active Set according to the invention.
Figure 5 illustrates schematically a radio communication system and a fourth Active Set according to the invention.

### DESCRIPTION OF PREFERRED EMBODIMENTS

A shared or common channel, such as a Downlink Shared Channel, DSCH, need not be time aligned between cells. As a consequence, soft handover of a shared or common channel is not immediately available for this channel. A DSCH is paired with a Dedicated Physical Channel, DPCH. The Dedicated Physical Channels of various cells are time aligned and accessible for soft handover. The different time alignment of associated channels raises problems when it comes to handover of channels not being time aligned.

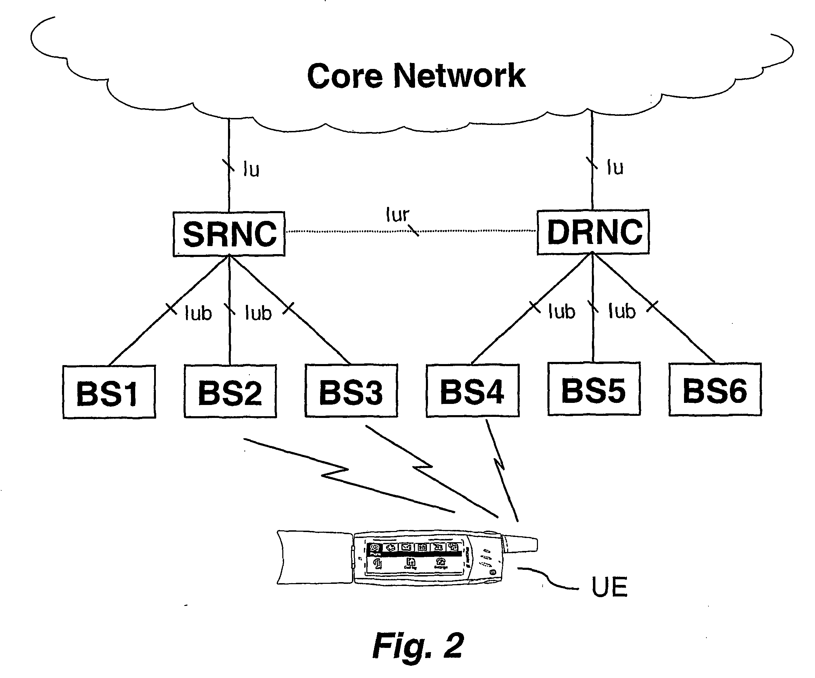

Hard handover and soft handover as such are well known. Using the terminology of figures 2-5, hard handover is a category of handover procedures where all the old radio links in the User Equipment UE are abandoned before new radio links are established whereas soft handover is a category of handover procedures where the radio links are added and abandoned in such manner that the User Equipment UE always keeps at least one radio link to a Base Station (BS1-BS6). Similar measures, such as energy to noise ratio, E_{c}/N₀, or energy to interference ratio on a Primary Common Pilot Channel, PCPICH, Received Signal Code Power, RSCP, on the PCPICH or downlink path loss, form a basis of a performance criterion used for soft and hard handover. However, hard handover, according to prior art, of a common or shared channel will result in inferior throughput.

The proposed hard handover within a dynamic Active Set is characterized by criteria to be used within the dynamic Active Set such as instantaneous link quality; average link quality; persistent link quality; total downlink power; usage of Physical Downlink Shared Channel, PDSCH; maximal PDSCH power; real time to non-real time traffic ratio or spreading factor as will be explained in detail below.

Handover is not restricted only to handover between base stations. However, for reasons of linguistic simplicity the specification describes the handover process according to the invention as a handover between base stations. It should be clear that handover between antenna sectors using separate shared channels is included as well. In accordance with this specification each such sector will be treated as a base station. Also included is interfrequency handover. Interfrequency handover is performed between separate carrier frequencies or frequency bands. Each such carrier frequency or frequency band is treated as a base station below.

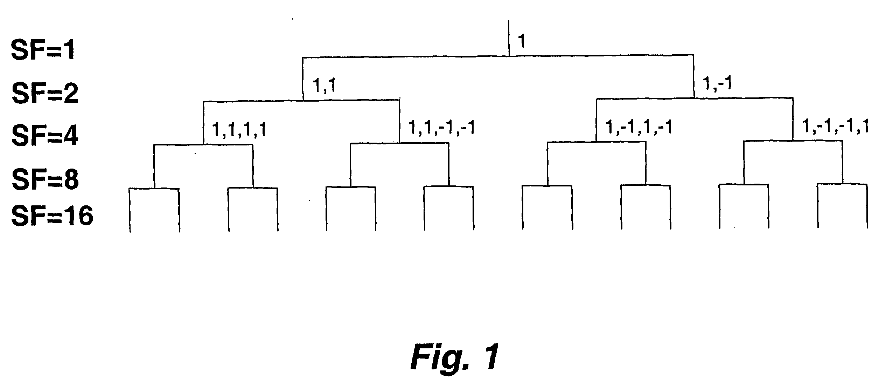

In Code Division Multiple Access, respective digital user signals are separated by individual spreading codes. Each code represents a spreading factor. Sub-channels or lower rate channels are separated by sub-codes with a greater spreading factor. Figure 1 illustrates the interrelations between data rates/sub-channels and sub-codes/spreading factors. It displays a binary code tree where a spreading factor, SF, equal to one occupies the entire code tree, i.e. all levels indicated by SF=2, SF=4, SF=8 and SF=16. This spreading factor translates into the highest user data rate. A sub-code with a spreading factor equal to two occupies only half the tree, the leftmost sub-tree or the rightmost sub-tree, in each case the sub-tree occupying the levels indicated by SF=4, SF=8 and SF=16 preventing other users from using the corresponding codes. Similarly, if a user is assigned a sub-code corresponding to a spreading factor equal to four, he occupies a sub-tree (and corresponding sub-channels) originating from the level indicated by SF=4 down to SF=16. Spreading factor four represents a medium user data rate. A user allocated a channel of spreading factor 16 occupies the lowest data rate in this exemplary figure. Spreading codes for SF=1, SF=2 and SF=4 are denoted at the root of the corresponding sub-tree. This code tree is only an example not limiting the scope of the invention.

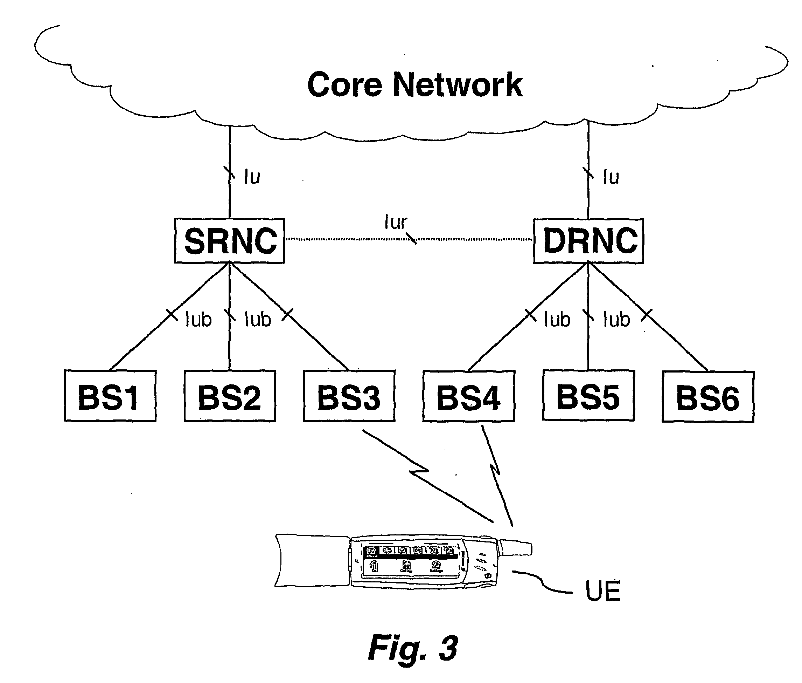

Figure 2 illustrates schematically a radio communication system. User Equipment UE is subject to soft handover involving radio links associated with Base Stations BS3, BS4 and BS5 in the Active Set. One of the BSs is in charge of communication on the DSCH. Figure 2 also illustrates Base Stations BS1, BS2 and BS3 connected to a Serving Radio Network Controller, Serving RNC or SRNC. The Serving RNC controls the connection between a Core Network and the UE. The Serving RNC is connected to the Core Network over a so-called Iu interface, Iu. The Serving RNC is also connected to another Radio Network Controller, RNC, called Drift RNC or DRNC. In the figure the Drift RNC controls Base Stations BS4, BS5 and BS6. The Serving RNC and the Drift RNC are connected to the controlled base stations over a so-called Iub interface. The RNCs (SRNC, DRNC) are interconnected over an Iur interface. As the User Equipment UE dissociates from BS2, it will finally be excluded from the Active Set when path loss increases and channel quality decreases, as schematically shown in figure 3 where the Active Set comprises links associated with BS3 and BS4.

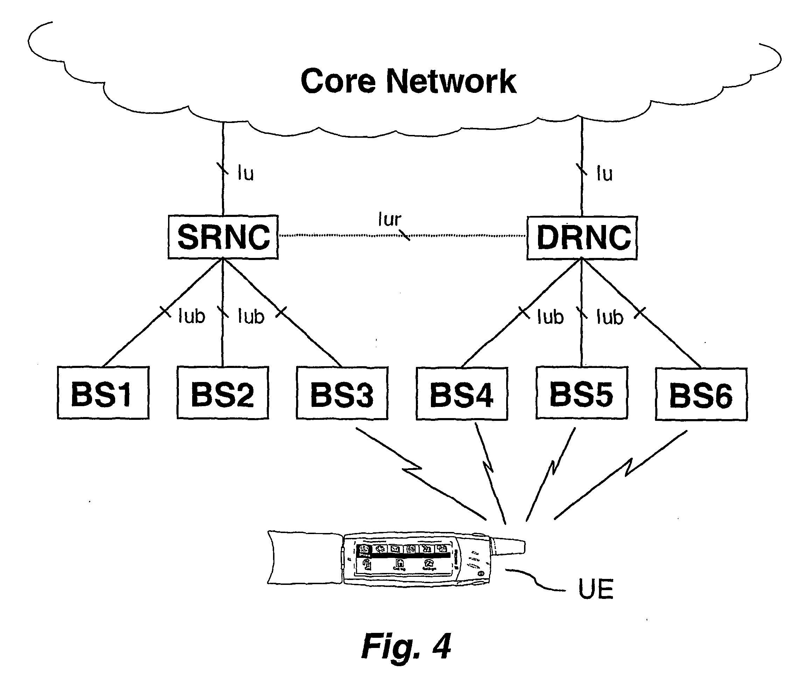

In figure 4, in comparison to figure 3, two more links associated with Base Stations BS5 and BS6 have been included in the Active Set. In figures 2, 3 and 4 the Serving RNC remains the same.

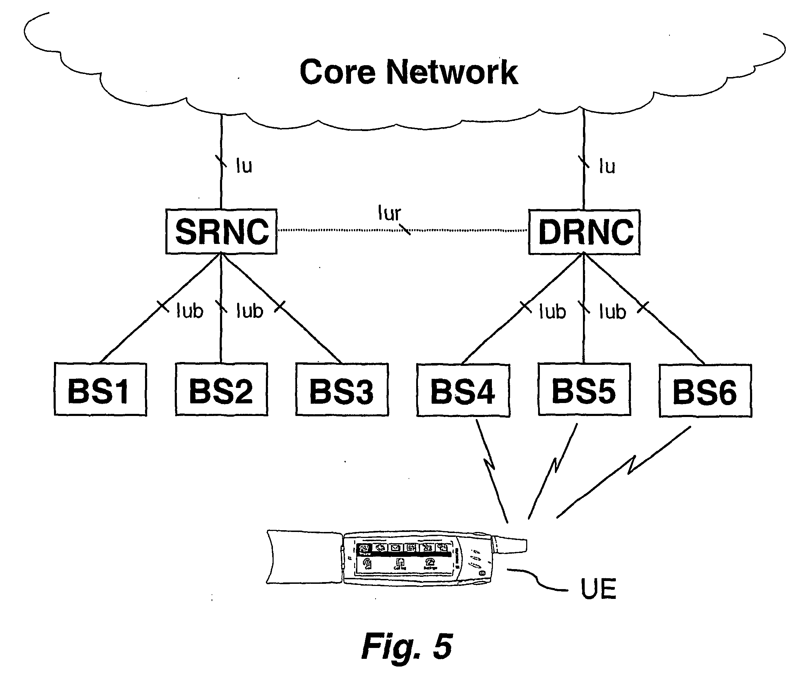

In figure 5, the link associated with BS3 is excluded from the Active Set due to channel and traffic situation. In figure 5 SRNC maintains the connection to the core network. However, as all Base Stations (BS4, BS5, BS6) associated with links involved in the Active Set are controlled by one RNC, the DRNC in figure 5, this RNC could be SRNC (interchanging the roles of the two RNCs) in figure 5 if SRNC-relocation were used.

Preferred embodiments are grouped into two fundamental embodiments. In a first fundamental embodiment of the invention, the common packet data channel of the serving cell is not handed over until its associated radio link is scheduled, in accordance with a specified criterion, to be excluded from the Active Set. Considering a process where base stations are excluded and added as in the sequence of figures 2-5 and where initially BS3 is the serving base station of the common packet data channel, it will not be handed over until figure 5 where the radio link associated with BS3 is excluded from the Active Set. Criteria for selection of a serving cell associated with a radio link within the Active Set, comprising Base Stations BS4, BS5 and BS6 is set out below.

According to a second fundamental embodiment of the invention, the serving cell is handed over whenever another cell with an associated radio link within the Active Set shows superior performance according to some specified criteria as set out hereinafter. In a time-varying environment with rapidly changing channel quality, measures need to be undertaken in order not to increase the number of handovers as further explained in the proceeding.

In WCDMA/UMTS a Universal Terrestrial Radio Access Network, UTRAN, chooses the serving base station routing a DSCH to the UE. Rapid time variations can be averaged out by long term filtering. An alternative is to prescribe that any change of a parameter forming a basis for handover shall persist a specified amount of time for a handover to be initiated. If, in one embodiment in accordance with the second fundamental embodiment, a performance criterion indicates that a base station does not have the best channel to/from the UE within the Active Set, a handover is initiated only if this condition persists a specified amount of time. For embodiments in accordance with the second fundamental embodiment it can also be advantageous to use a hysteresis, handing over a DSCH to another base station only if the performance measure of the candidate base station supersedes the performance measure of the presently serving base station by a specified amount, i.e. introducing a threshold. Of vital importance to the invention is that the criteria are only applied within the Active Set. Consequently, a base station not included in the Active Set is never a candidate base station for a handover of the shared channel. For the purpose of illustration, BS3 in figure 5 is not a candidate serving base station, as it is not associated with a link within the Active Set. In figure 5 only BS4, BS5 and BS6 may be handover candidates for the shared channel as they are the only base stations with associated radio links included in the Active Set.

When it comes to possible choices of parameter selections using one single parameter, common in prior art, introduces problems regarding throughput. Preferred embodiments in accordance with the first and second fundamental embodiments implement some particular parameter selections advantageously used for cell selection from a dynamic Active Set in order to increase throughput. The following handover parameters, one or more of which to be combined with at least one channel criterion described above, for comparing handover candidate base stations associated with links within the Active Set are proposed,
- total transmitted downlink power from the base station or antenna sector,
- PDSCH occupancy,
- lowest spreading factor available for PDSCH,
- maximum power available for PDSCH, and
- ratio of real-time to non real-time traffic.
   Total transmitted downlink power reflects the margin to congestion. Occupancy is measured as the fraction of time the PDSCH is occupied or used, as opposed to idle. Balancing PDSCH occupancy or usage within an Active Set will also increase fairness between users in different cells associated with links of the Active Set. A small spreading factor corresponds to a high bit rate. The smaller the spreading factor available the larger the sub-tree of a code tree available. The error rate depends on received bit energy. Everything else being kept equal for a power-limited channel, a bit rate increase implies a requirement for minimum transmission power to increase, in order not to increase the error rate. Consequently, with a high maximum power available for PDSCH the data rate on the channel can be increased without increasing the error rate more than allowed for. If the ratio of real-time traffic to non real-time traffic is high it is generally beneficiary to select another cell with a lower ratio. The requirement on the real-time traffic ratio is motivated by e.g.
- it protects real-time traffic, and
- it enables free capacity to be used by PDSCH.

The invention is not intended to be limited only to the embodiments described in detail above. Changes and modifications may be made without departing from the invention. It covers all modifications within the scope of the following claims.

## Claims

1. A method of handover of a shared or common channel from a first radio entity to a second radio entity, the method **characterized in that** only one or more radio entities associated with one or more radio links in a dynamic active set of a user equipment are considered candidates for hard handover of the shared or common channel when the user equipment is subject to soft handover involving radio links associated with the active set.

2. The method according to claim 1 **characterized in that** the radio entities considered handover candidates are base stations.

3. The method according to claim 1 **characterized in that** the radio entities considered handover candidates are antenna sectors.

4. The method according to claim 1 **characterized in that** the radio entities considered handover candidates are carrier frequencies.

5. The method according to any of claims 1-4 **characterized in that** the shared or common channel is handed over not until the radio link of the first radio entity is scheduled to be excluded from the dynamic active set, the exclusion being based upon at least a first parameter and the handover candidate being selected based upon at least a second parameter.

6. The method according to any of claims 1-4 **characterized in that** one of the one or more handover candidates is selected for handover based upon at least two parameters, the first parameter being processed according to one of the processes of long term filtering, persistency checking, hysteresis thresholding.

7. The method according to claim 5 or 6 **characterized in that** the second parameter is one of total transmitted downlink power from the radio entity, PDSCH occupancy, lowest spreading factor available for PDSCH and ratio of real-time to non real-time traffic.

8. The method according to claim 5 or 6 **characterized in that** the first parameter is one of received signal strength, received bit energy, interference level, noise level, downlink path loss, error rate or a combination thereof.

9. The method according to claim 5 or 6 **characterized in that** the first parameter is one of energy to interference ratio on a Primary Common Pilot Channel and received signal code power on a Primary Common Pilot Channel.

10. A radio communication system **characterized by** means for carrying out the method in any of claims 1-9.

## Patentansprüche

1. Verfahren zur Übergabe eines geteilten oder gemeinsamen Kanals von einer ersten Funkentität an eine zweite Funkentität, das Verfahren ist **dadurch gekennzeichnet, dass** nur ein oder mehrere Funkentitäten, die mit einer oder mehreren Funkverbindungen in einem dynamisch aktiven Satz einer Benutzerausrüstung assoziiert sind, als Kandidaten für harte Übergabe des geteilten oder gemeinsamen Kanals berücksichtigt werden, wenn die Benutzerausrüstung einer weichen Übergabe unterzogen wird, die Funkverbindungen einbezieht, die mit dem aktiven Satz assoziiert sind.

2. Verfahren nach Anspruch 1, **dadurch gekennzeichnet, dass** die Funkentitäten, die als Übergabekandidaten berücksichtigt werden, Basisstationen sind.

3. Verfahren nach Anspruch 1, **dadurch gekennzeichnet, dass** die Funkentitäten, die als Übergabekandidaten berücksichtigt werden, Antennensektoren sind.

4. Verfahren nach Anspruch 1, **dadurch gekennzeichnet, dass** die Funkentitäten, die als Übergabekandidaten berücksichtigt werden, Trägerfrequenzen sind.

5. Verfahren nach einem der Ansprüche 1-4, **dadurch gekennzeichnet, dass** der geteilte oder gemeinsame Kanal erst übergeben wird, wenn die Funkverbindung der ersten Funkentität zur Ausschließung von dem dynamisch aktiven Satz geplant ist, wobei die Ausschließung auf mindestens einem ersten Parameter basiert und der Übergabekandidat, der ausgewählt wird, auf mindestens einem zweiten Parameter basiert.

6. Verfahren nach einem der Ansprüche 1-4, **dadurch gekennzeichnet, dass** einer des einen oder der mehreren Übergabekandidaten zur Übergabe ausgewählt wird basierend auf mindestens zwei Parametern, wobei der erste Parameter nach einem der Prozesse Langzeitfiltration, Persistenzprüfung, Hysterese-Schwellenwertbildung verarbeitet wird.

7. Verfahren nach Anspruch 5 oder 6, **dadurch gekennzeichnet, dass** der zweite Parameter einer ist ausgewählt aus gesamter übertragener Abwärtsleistung von der Funkentität, PDSCH-Belegung, niedrigster für PDSCH verfügbarer Spreizfaktor und Verhältnis von Echtzeit- zu Nichtechtzeit-Verkehr.

8. Verfahren nach Anspruch 5 oder 6, **dadurch gekennzeichnet, dass** der erste Parameter einer ist ausgewählt aus empfangener Signalstärke, empfangener Bitenergie, Interferenzpegel, Rauschpegel, Abwärtsfunkfeld-Verlust, Fehlerrate oder einer Kombination davon.

9. Verfahren nach Anspruch 5 oder 6, **dadurch gekennzeichnet, dass** der erste Parameter einer ist ausgewählt aus Energie-zu-Interferenz-Verhältnis in einem primären gemeinsamen Pilotkanal und empfangener Signalcodeleistung in einem primären gemeinsamen Pilotkanal.

10. Funkkommunikationssystem, **gekennzeichnet durch** Mittel zum Ausführen des Verfahrens in einem der Ansprüche 1-9.

## Revendications

1. Procédé de transfert d'un canal partagé ou commun depuis une première entité radio jusqu'à une seconde entité radio, le procédé étant **caractérisé en ce que** seulement une ou plusieurs entités radio en association avec une ou plusieurs liaisons radio dans un ensemble actif dynamique d'un équipement d'utilisateur sont considérées en tant que candidats pour un transfert dur du canal partagé ou commun lorsque l'équipement d'utilisateur est soumis à un transfert doux mettant en jeu des liaisons radio associées à l'ensemble actif

2. Procédé selon la revendication 1, **caractérisé en ce que** les entités radio qui sont considérées en tant que candidats de transfert sont des stations de base.

3. Procédé selon la revendication 1, **caractérisé en ce que** les entités radio qui sont considérées en tant que candidats de transfert sont des secteurs d'antenne.

4. Procédé selon la revendication 1, **caractérisé en ce que** les entités radio qui sont considérées en tant que candidats de transfert sont des fréquences de porteuse.

5. Procédé selon l'une quelconque des revendications 1 à 4, **caractérisé en ce que** le canal partagé ou commun n'est pas transféré tant que la liaison radio de la première entité radio n'est pas planifiée pour être exclue de l'ensemble actif dynamique, l'exclusion étant basée sur au moins un premier paramètre et le candidat de transfert étant sélectionné sur la base d'au moins un second paramètre.

6. Procédé selon l'une quelconque des revendications 1 à 4, **caractérisé en ce que** l'un des un ou plusieurs candidats de transfert est sélectionné pour un transfert sur la base d'au moins deux paramètres, le premier paramètre étant traité conformément à l'un des processus que sont un filtrage de long terme, un contrôle de persistance, un effet de seuil d'hystérésis.

7. Procédé selon la revendication 5 ou 6, **caractérisé en ce que** le second paramètre est un paramètre pris parmi une puissance de liaison descendante transmise totale en provenance de l'entité radio, une occupation de PDSCH, un facteur d'étalement le plus faible disponible pour un PDSCH et un rapport trafic temps réel sur trafic non temps réel.

8. Procédé selon la revendication 5 ou 6, **caractérisé en ce que** le premier paramètre est un paramètre pris parmi une intensité de signal reçu, une énergie binaire reçue, un niveau d'interférence, un niveau de bruit, une perte de voie de liaison descendante, une fréquence d'erreurs ou une combinaison afférente.

9. Procédé selon la revendication 5 ou 6, **caractérisé en ce que** le premier paramètre est un paramètre pris parmi un rapport énergie sur interférence sur un canal de pilote commun primaire et une puissance de code de signal reçu sur un canal de pilote commun primaire.

10. Système de communication radio **caractérisé par** un moyen pour mettre en oeuvre le procédé selon l'une quelconque des revendications 1 à 9.
